(19) Europäisches Patentamt / European Patent Office / Office européen des brevets

(11) **EP 4 660 468 A1**

(12) **EUROPEAN PATENT APPLICATION**

(43) Date of publication:
**10.12.2025 Bulletin 2025/50**

(21) Application number: 25162997.8

(22) Date of filing: **11.03.2025**

(51) International Patent Classification (IPC):
*F16B 13/00* (2006.01)       *F16B 43/00* (2006.01)

(52) Cooperative Patent Classification (CPC):
**F16B 13/00; E04B 1/66; F16B 43/001**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.06.2024 GR 20240100410**
**03.12.2024 EP 24217280**

(71) Applicant: **Tirmpas, Vasileios**
**19013 Saronida (GR)**

(72) Inventors:
• **TIRMPAS, Vasileios**
**19013 Saronida (GR)**
• **TIRMPAS, Michael**
**17455 Alimos (GR)**

(74) Representative: **Kouzelis, Dimitrios**
**Intel-Lex**
**19, Loukianou Str.**
**10675 Athens (GR)**

(54) **EXPANDABLE MOISTURE-ACTIVATED SEALING ELEMENT**

(57)     Sealing element which is elastically expandable when moisture is absorbed, designed to effectively support the sealing of holes that are drilled into roofs, terraces and walls for the purpose of securing constructions against moisture or water infiltration in the building material or the building itself. It is made from a hydro-expandable material, such as bentonite, or synthetic hydro-expandable TPE, mixed with a composite material possessing elastic properties. The element is produced either through mold injection of a mixture of a hydro-expandable material with a synthetic material possessing elastic properties, or through successive injection, of first a plastic material to form a plug and then of a composite material comprising a hydro-expandable material and a material possessing elastic properties.

Fig. 2

**EP 4 660 468 A1**

**Description**

The present disclosure relates to sealing devices for holes in building structures, and more particularly to an expandable sealing element, method of manufacturing, and method of using such an element for sealing holes drilled in plates or other building elements.

Sealing holes in building structures is a critical aspect of construction and maintenance, particularly for roofs, terraces, and walls. These holes are often necessary for securing various installations such as insulating materials, antennas, air conditioning units, solar panels, railings and other equipment. However, they also create potential vulnerabilities for water infiltration, which can lead to significant structural damage over time.

Traditional methods for sealing such holes typically involve the use of silicone, tar, or other sealants applied around and over the fasteners used to secure installations. These methods aim to create a barrier that prevents water from entering the drilled hole and potentially damaging the underlying structure. However, these conventional sealing techniques are expensive in terms of manpower and quantity of the material used and often prove inadequate in the face of challenging environmental conditions.

Also, the effectiveness of traditional sealants is compromised by several factors. Extreme temperature fluctuations and prolonged exposure to UV radiation cause materials to expand and contract, potentially creating cracks and gaps in the seal, reducing their effectiveness over time. Additionally, the presence of standing water, particularly on flat roofs or terraces, can test the limits of these sealing methods. As a result, water infiltration remains a persistent problem, leading to issues such as concrete degradation, corrosion of the steel reinforcement, and elevated moisture levels within building structures.

Another challenge with conventional sealing methods is their lack of adaptability. Once applied, these sealants generally remain static, changes to e.g. the position of an antenna is difficult and their response to changes in environmental conditions or structural movements is problematic. This rigidity can lead to seal failure over time, especially in structures subject to settling or in areas with significant temperature variations.

It has been appreciated that a dynamically responsive sealing solution is needed that overcomes one or more of these problems.

The sealing element of the present invention is hydro-expandable, which means that it is elastically expandable or swelling when moisture is absorbed. It is designed to effectively support the operation of sealing of holes that are drilled into roofs, terraces and walls for the purpose of securing holes made in constructions against moisture or water infiltration in the building structure or the building itself. It is made from a pioneering composite material that expands upon contact with water. It has a long service life and durability because it is not exposed to sunlight. It is also well-designed to withstand high compression forces.

The expandable sealing element could also be used in automotive applications to seal electrical components housing, as many electrical components are exposed to moisture and temperature fluctuations. In the marine industry, the sealing element could be utilized for waterproofing deck fittings on boats and ships. The aerospace industry could benefit from using the expandable sealing element to seal fasteners on aircraft panels. Aircraft are exposed to extreme temperature changes and moisture conditions at varying altitudes. By incorporating the sealing element around panel fasteners, manufacturers could enhance the aircraft's resistance to water ingress and potential corrosion.

The hydro-expandable material in the element may be bentonite or may comprise bentonite. Utilizing bentonite as a hydrophilic material leverages its natural ability to absorb water and expand. Bentonite is a natural clay consisting mainly of smectite minerals, commonly formed by decomposition of volcanic ash or tuff. Bentonite is a material which has the ability to shrink or swell markedly in response to the removal or addition of water or moisture. Bentonite swells to approximately 100% of its original volume when it absorbs water and shrinks to approximately 50% of its volume when moisture is removed.

Alternatively, the hydro-expandable material in the element may be synthetic material. Employing synthetic hydro-expandable material allows for greater control over the expansion properties of the element, potentially offering improved performance in specific environmental conditions or applications, such as higher protection against UV, temperature variations and more. Such a synthetic material expands from 50% to up to 1.000% of its original volume. The skilled person will choose a material with low Water Swelling Ratio of expansion when the substrate is rather soft, weak or even fragile and may be easily deformed or create cracks, whilst he will choose a material with much higher Water Swelling Ratio when the substrate is strong and cannot be easily altered. Typically used material in this application is TPE, EPDM, PVC, PU, or any other Thermoplastic Elastomer which contains swellable-hydrophilic particles such as Sodium Polyacrylate (ACR, ASAP, or PAAS) a sodium salt of polyacrylic acid with the chemical formula $[-CH_2-CH(CO_2Na)]n$ . This polymer has a "rate of expansion" or "Water Swelling Rate" or "Water Swelling Ratio" ranging from 100% to 1.000%.

The swelling ratio was calculated by the following equation:

$$\text{Swelling\%} = (\,(A_{wet}-A_{dry})\,/\,A_{dry}\,) \times 100$$

where $A_{dry}$ and $A_{wet}$ are the area of dried and wet samples respectively.

According to a preferred embodiment of the invention, the sealing element has also a lip at the top, which covers the perimeter of the hole, keeping said sealing element steady in place whilst fixing the screw. The fastening screw goes through this element and then anchors into the plug which may already be placed in the hole.

Alternatively, the expandable sealing element is placed close to the entrance of the hole, before, or after a threaded rod is inserted into the hole, which contains chemical anchoring glue. The anchoring glue fixes the rod in a stable position and then the bold is screwed at the other, free end, whilst the sealing element seals effectively the opening.

Also, the expandable sealing element is placed close to the entrance of a through hole of a wall for a wire rope or a cable to pass through.

The sealing element can be manufactured for any hole diameter and can have different shapes, forms, and sizes, which will be customized to fit the anchoring point to achieve perfect sealing of the construction. Preferably, the sealing element can be cylindrical and have the form of a ring having various thickness, diameter and length. It can also be conical, in order to facilitate insertion into the hole, or have the form of a truncated cone.

The element may have the form of a standalone Universal Plastic Anchor (UPA) or a simplified form of an UPA. It may also have the form of a metal anchor, when higher stability and resistance to elevated forces is required. Shaping the element in the form of an UPA integrates the new sealing functionality with a familiar and widely used anchoring system, simplifying installation processes and enhancing compatibility with existing construction practices.

The method of manufacturing the element of the present invention comprises the single mold injection at once, of a molten mixture of a hydro-expandable material with a synthetic, compatible material, such as rubber. This production method ensures a uniform distribution of hydro-expandable and elastic materials throughout the element, resulting in consistent performance and reliable sealing properties.

Another method of production of the element comprises successive injections of first a plastic material to form the UPA and then the injection of-, or spraying of-, or immersion to-the hydro-expandable material, to the whole-, or to at least part of it. Preferably, for optimizing the use of this hydro-expandable element, said material will be applied only to the said "outer" part of the plug, that is the part which will be at the proximity of the opening of the hole, when the plug is positioned and is ready to receive the screw. This last material can comprise a natural material, such as bentonite, or a composite material comprising a hydro-expandable material which possesses elastic properties, or any suitable combination of the above.

This two-step injection process allows for the creation of an element with distinct layers, potentially offering enhanced structural integrity or specialized functionality in different parts of the element.

In case a metal anchor is used, then the same process takes place: a layer of hyrdo-expandable material is applied, either on the whole surface of the anchor, or only on the inner and outer surfaces of the outer part of the anchor. The outer part of the anchor is the one which enters the last into the hole and is closer to the surface of the plate.

This application of the element addresses the critical need for effective waterproofing in construction, particularly in scenarios where structures or equipment must be secured to roofs, walls, or other building surfaces, preventing water infiltration and associated structural damage.

In what follows, several terms

- the term "hydrophilic" means a material which not only is able to absorb moisture but also expands in volume when absorbing moisture.
- The terms "expandable" and "swelling" should be considered as synonyms.
- the terms "Universal Plastic Anchor", "UPA" and "plug" should be considered as synonyms.

Embodiments of the invention will be described, by way of example, with reference to the following drawings, in which:

Figures 1 represent three different versions of the sealing element
Figure 2 illustrates a sectional view of a sealing assembly with a plug
Figure 3 illustrates a sectional view of a sealing assembly with anchoring glue
Figure 4 illustrates a sectional view of a sealing assembly with a separate sealing element.
Figure 5 illustrates a sectional view of a wall-mounted sealing element
Figure 6 illustrates an expanded view of the sealing assembly with an integrated sealing element.

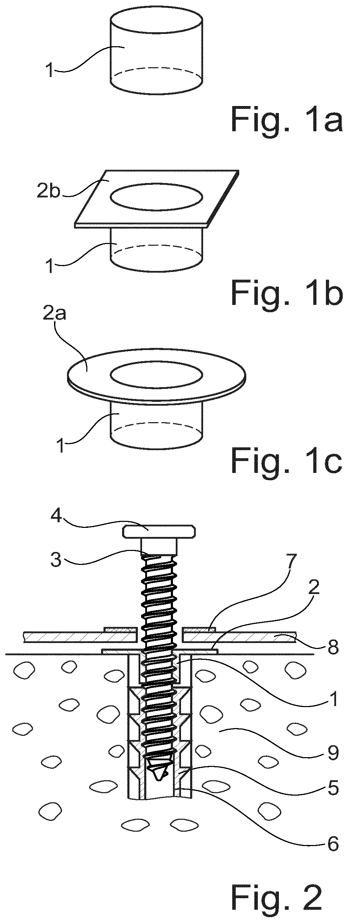

Figures 1a, 1b, 1c, represent three different versions of the sealing element, in which Figure 1a illustrates a perspective view of a basic sealing element, Figure 1b illustrates a perspective view of a sealing element with square or rectangular lips and Figure 1c illustrates a perspective view device with a circular lip.

According to the basic embodiment of the invention represented in Figure 1a, the sealing element (1) has a cylindrical form. Despite its simplicity, the cylindrical body 1 of the sealing element (1), when placed at the right position, is capable of effectively sealing drilled holes, preventing water infiltration and potential damage to the building structure.

According to another embodiment of the invention represented in Figures 1b and 1c, the sealing element (1) has also a lip (1b, 1c) at the top, which, when the element is placed in a hole, prevents the element (1) to enter further in the hole and at the same time covers a bigger area outside the perimeter of the hole (6), keeping it steady in place whilst fixing the plug and the screw. The lip may be circular (1c) and have the form of a disc with a hole, orthogonal (1b), having also a hole in its middle area, or of another appropriate shape. With such a form, the element is designed to cover a larger area around the perimeter of a drilled hole when the sealing element is installed, providing both additional sealing surface and stability of the position of the element. Preferably, the lip (1b, 1c) is made of the same material as the cylindrical body 1, allowing it to also expand upon contact with water and contract when the water evaporates.

Figure 2 represents the most common use of the present invention, in which a hole (6) is drilled in a concrete, or other plate (9), a plug (5) of a known type such as Universal Plastic or Metal Anchor (5) is placed relatively deeply inside the hole (6), the sealing element (1) is placed at the opening of the hole (6), optionally with its lips (2a, 2b) extending outside the perimeter of the hole, an insulating material (8) or a metal plate (8) is placed on top of the sealing element (1) and finally the screw (3, 4) of a known type is screwed. The fastening screw (4) goes through this element (1) and then anchors into the plug (5), or UPA, which may already be placed in the hole (6). Between the top layer (8) and the screw head (4) a conventional metal element (7) may be placed to better fasten the screw (3). Due to its property of expanding when it comes into contact with water, the sealing element (1) will cover any gaps that exist or are created from potential expansions, contractions, or vibrations that may occur in the structure. After expansion, the sealing element (1) will return to its original form once the water evaporates from the area, without losing its property of expanding again when water or humidity reappears.

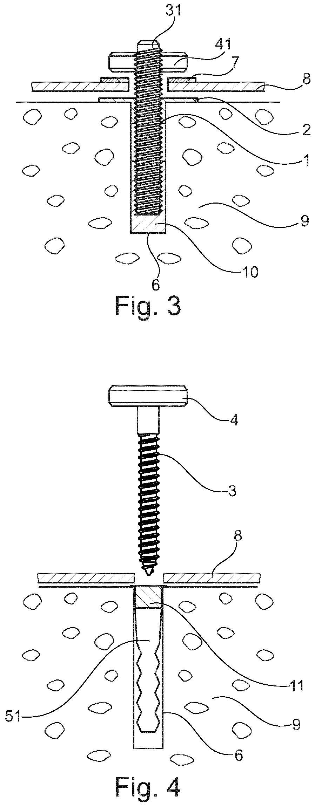

Figure 3 represents an alternative method of sealing the drilled hole (6), in which a threaded rod (31) is placed in the hole (6) containing chemical anchoring glue. The sealing element (1), optionally with its lips (2) is first placed at the top of the hole, then the threaded rod (31) is inserted in the middle of the hole (6). The hole (6) already contains chemical anchoring glue (10), which then surrounds the threaded rod (31) and, when dried, fixes it in a secure position. Alternatively, the technician can first place the chemical glue (10) in the hole (6), then place the treaded rod (31), when the chemical glue is dry, add the sealing element (1, 2), then place the top layer (8), the metal ring (7) and end by screwing the bolt (41).

Figure 4 represents a further embodiment of the present invention, in which a standalone component in the form of a plug comprises both a conventional plug and a sealing element. The plug consists of two parts which are embedded, a first part (51), which is a conventional plug, such as a Universal Plastic Anchor, conventionally made of polypropylene, polyethylene, nylon or other plastic material and having the known form (not represented in this figure) and a second part (11), which is the sealing element of the present invention. Such an independent, standalone plug (51) can be produced through successive injections, first of the plug part (5) and then of the sealing element part (11). This standalone component is easy to manufacture in one mold and combines the advantages of conventional plug (UPA), such as the ability to steadily fix a screw (3, 4) on e.g. a wall or a plate and the ability to seal the opening of the drilled hole with a hydro-expandable material (11).

Yet, according to a variation of the previous embodiment of Figure 4, the plug (5) is a normal plug made of nylon, polyethylene or metal, and its outer part is surrounded by an element (1) of the present invention, which is placed after the production of the plug.

Alternatively, the element can take the form of, yet another standalone plug produced as one part, through co-injection or simultaneous injection of two different materials which have been previously mixed together or are mixed during injection. The first is a hydro-expandable material as already described and the second is a composite material possessing elastic properties. The final product takes the shape of the mold designed for it. This co-injection method is achieved using plastic elastomer production machines, which provide the final product (plug) at a low cost due to their high production capacity.

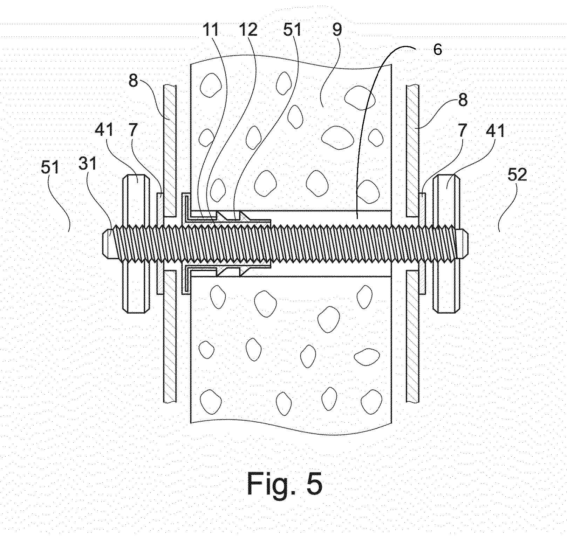

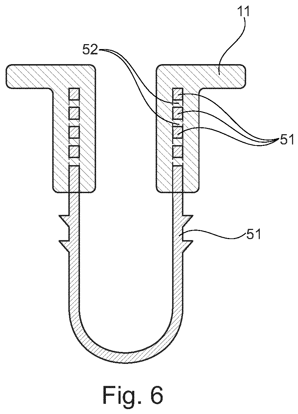

Yet, according to a further variation of the previous embodiment of Figure 4, represented this time in Figures 5 and 6, the plug (51) is a normal one made of nylon or polyethylene or even metal and its outer part, that is the part that remains close to the opening of the hole, after of full insertion of the plug into the hole, contains openings or holes (52) of appropriate shape, size and number, to allow subsequent application of a composite material in liquid form, and penetration of said composite material from one side to the other.

After the first injection of the plastic material conventionally used to make plugs, such as UPA, follows a second application of a hydrophilic, hydro-expandable material, which is applied only at the outer part of the plug. The application of the composite material, which is in fluid form, can be conventionally done through injection. The appropriately provided holes (52) on said outer part of the plug, allow the penetration of the hydrophilic material from the part where the material is injected (in most cases the outer surface of the plug), to the other part (in this case, the inner surface).

Alternatively, the liquid composite hydro-expandable material can be sprayed on the Universal Plastic or Metal Anchor plug (5), whilst yet another method is the partial immersion at the outer part of the plug (5) into the liquid composite hydro-expandable material.

These methods of production result of this plug (51) which possesses all the properties of a conventional plug (5), such as stiffness when it has to be hammered to enter the hole, and, in addition, comprises a built-in element which expands upon absorption of water and seals hermetically the hole against penetration of water or humidity.

The element (1) of the present disclosure, or the stand alone plug (11, 51) of its variations, may comprise rims or flanges as well as elongated protrusions and recesses, for being adaptable to a wider range of hole diameters and for stabilizing its position within the hole, whilst the screw is entering the plug.

The sealing element of the present invention is made from a hydro-expandable material that expands upon contact with water, which is optionally mixed with a plastic material having elastic properties. According to an embodiment of the invention, the hydrophilic expandable material is a natural material such as bentonite, which is mixed with an elastic material, such as an elastomer and together form the element (1, 11).

The sealing element can alternatively be made of artificially manufactured composites containing hydro-expandable material and elastic material, such as Thermoplastic Elastomers (TPE). This way, the final product possesses both hydro-expandable properties and elasticity.

The sealing element of the present disclosure has a long service life and durability because it is placed basically within the hole, consequently it is not exposed to sunlight. It is also well-designed to withstand high compression forces.

**Claims**

1. Sealing element (1, 11) for sealing a hole (6) opened in a plate (9) for fixing objects on the plate, **characterized by** comprising a composite hydro-expandable material.

2. The sealing element (1, 11) of claim 1, **characterized in that** it has the form of a cylinder.

3. The sealing element (1, 11) of claim 1, **characterized in that** it has the form of a cone or a truncated cone.

4. The sealing element (1, 11) of claims 1 to 3, **characterized in that** it comprises elongated protrusions.

5. The sealing element (1, 11) of claims 1 to 3, **characterized in that** it comprises at least one circumferential flange.

6. The sealing element (1, 11) of claims 1 to 5, **characterized in that** it comprises a lip (2a, 2b).

7. The sealing element (1, 11) of claims 1 to 6, **characterized in that** the composite hydro-expandable material comprises bentonite or swellable-hydrophilic particles of Sodium Polyacrylate.

8. The sealing element (1, 11) of claims 1 to 7, **characterized in that** it has the form of a Universal Plastic Anchor (5, 51).

9. The sealing element (1, 11) of claims 1 to 7, **characterized in that** it comprises a Universal Plastic Anchor or a Universal Metal Anchor (5) and an outer layer applied on said Anchor made of said composite hydro-expandable material.

10. Method of production of the sealing element (1, 11) of claims 1 to 8, through mold injection of a molten mixture of a composite hydro-expandable material.

11. Method of production of the sealing element (1, 11) of claim 10, through successive mold injection of first a plastic material to form a plug (5) and then of a composite material possessing hydro-swellable properties.

12. Method of production of the sealing element (1,11) of claim 11, through the application of a composite hydro-expandable material on at least a portion of a Universal Plastic Anchor.

13. Method of production of the sealing element (1, 11) of claim 12, in which the composite hydro-expandable material is applied through mold injection to the outer part of the Anchor, on the outer surface of the Anchor and penetrates through holes (52) to cover at least part of the inner surface of the Anchor (51).

14. Method of production of the sealing element (1,11) of claim 13, in which the application of the composite hydro-expandable material is done through:

    - either injection of said composite hydro-expandable material on at least a portion of said Anchor, or
    - spraying of said composite hydro-expandable material on at least a portion of said Anchor, or
    - immersion of at least a portion of said Anchor into said composite hydro-expandable material.

15. Use of the sealing element (1, 11) of claims 1 to 9 for sealing a hole (6) opened on a surface (9), against water or moisture.

Fig. 1a

Fig. 1b

Fig. 1c

Fig. 2

Fig. 3

Fig. 4

Fig. 5

Fig. 6

**Europäisches Patentamt**
**European Patent Office**
**Office européen des brevets**

# EUROPEAN SEARCH REPORT

**Application Number**

EP 25 16 2997

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 486 869 A1 (ASAHI DENKA KOGYO KK [JP]) 27 May 1992 (1992-05-27) * the whole document * ----- | 1-3,5,6, 8-15 | INV. F16B13/00 F16B43/00 |
| X | KR 2016 0021992 A (DONGWOO ENGINEERING & CONSTRUCTION CO LTD [KR]) 29 February 2016 (2016-02-29) * the whole document * ----- | 1,4,7 | |
| X | KR 2006 0016065 A (KOREA CONSTRUCTION MAN CORP [KR]) 21 February 2006 (2006-02-21) * the whole document * ----- | 1 | |
| X | KR 2010 0004982 U (NN) 13 May 2010 (2010-05-13) * the whole document * ----- | 1 | |
| X | EP 3 604 831 B1 (SOPRO BAUCHEMIE GMBH [DE]) 11 August 2021 (2021-08-11) * the whole document * ----- | 1 | |

| TECHNICAL FIELDS SEARCHED (IPC) |
|---|
| F16B |

The present search report has been drawn up for all claims

| Place of search | Date of completion of the search | Examiner |
|---|---|---|
| Munich | 13 June 2025 | Pirog, Pawel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 2997

This annex lists the patent family members relating to the patent documents cited in the above-mentioned European search report.
The members are as contained in the European Patent Office EDP file on
The European Patent Office is in no way liable for these particulars which are merely given for the purpose of information.

13-06-2025

| Patent document cited in search report | | Publication date | Patent family member(s) | | Publication date |
|---|---|---|---|---|---|
| EP 0486869 | A1 | 27-05-1992 | AT | E125020 T1 | 15-07-1995 |
| | | | DE | 69111193 T2 | 16-11-1995 |
| | | | EP | 0486869 A1 | 27-05-1992 |
| | | | ES | 2078412 T3 | 16-12-1995 |
| | | | JP | H0473611 U | 29-06-1992 |
| | | | JP | H0810702 Y2 | 29-03-1996 |
| | | | US | 5193960 A | 16-03-1993 |
| KR 20160021992 | A | 29-02-2016 | NONE | | |
| KR 20060016065 | A | 21-02-2006 | NONE | | |
| KR 20100004982 | U | 13-05-2010 | NONE | | |
| EP 3604831 | B1 | 11-08-2021 | DE 202018003632 U1 | | 07-08-2019 |
| | | | EP | 3604831 A1 | 05-02-2020 |
| | | | EP | 3904704 A1 | 03-11-2021 |
| | | | HU | E056288 T2 | 28-02-2022 |
| | | | MA | 49531 A | 14-04-2021 |
| | | | PL | 3604831 T3 | 10-01-2022 |

EPO FORM P0459

For more details about this annex : see Official Journal of the European Patent Office, No. 12/82